# EUROPEAN PATENT APPLICATION

(11) **EP 4 287 456 A1**
(43) Date of publication of application: **06.12.2023**
(21) Application number: 23168809.4
(22) Date of filing: 19.04.2023
(51) Int. Cl.: H02J 50/00, H02J 50/40

(54) **WIRELESS CHARGING DEVICE AND COIL FORMING DEVICE**

(30) Priority: 31.05.2022 JP 2022089308
(71) Applicant: Hitachi-LG Data Storage, Inc., Tokyo 108-0022 (JP)
(72) Inventor: MASUDA, Kozo, Tokyo, 108-0022 (JP)
(74) Representative: Mewburn Ellis LLP

(57) **Abstract**

A wireless charging device includes a plurality of elemental parts including a switch part and a conductor connecting between the adjacent elemental parts, and a coil forming part applied to a charging surface on which a charging target is placed. The control unit controls the switch part to form, on the charging surface, a coil including the switch part in an ON state and the conductor in a conducting state that allows current to flow that form a coil-shaped current path.

## Description

### BACKGROUND OF THE INVENTION

### 1. Field of the Invention

The present invention relates to a wireless charging device and a coil forming device.

### 2. Description of the Related Art

Patent Document 1 (Japanese Patent Application Laid-Open No. 2016-39773) discloses technology related to wireless charging devices (hereinafter referred to as "conventional technology").

The conventional technology selects two adjacent power transmission coils from a plurality of power transmission coils according to the relative positions of the power receiving coils with respect to the plurality of power transmission coils, and switches the connection state between the power transmission circuit and the plurality of power transmission coils so that AC power is supplied to the selected two adjacent power transmission coils. This allows the conventional technology to receive power from the transmission coils that are positioned according to the location of the receiving coils.

However, in the conventional technology, the position and size of the power transmission coil are not appropriate for the power receiving coil, resulting in a portion of the power transmission coil that does not face the power receiving coil, which wastes the magnetic field and can cause a decrease in the efficiency of the power supply.

To address this problem, if a power transmission coil of any size can be formed at any position in the in-plane direction of the charging surface, the efficiency of power supply can be improved because the power transmission coil can be formed at the appropriate position and of the appropriate size with respect to the receiving coil.

Therefore, it is required to form a coil of any size at any position in the in-plane direction on the surface where the coil is to be formed (e.g., the charging surface where the charging target is placed).

### SUMMARY OF THE INVENTION

The present invention has been made in order to solve the above problem. That is, an object of the present invention is to provide a wireless charging device and a coil forming device capable of forming a coil of any size at any position in the in-plane direction on a coil forming target surface.

In order to solve the above problem, the present disclosed wireless charging device comprises: a coil forming part including:
a plurality of element parts including a switch part; and
conductors connecting adjacent the element parts, the coil forming part being applied to a charging surface where a charging target is disposed; and
a control unit that controls the conductors between the adjacent element parts to be in either a conducting state or a non-conducting state by controlling the switch part to be either an ON state or an OFF state.

The control unit is configured to control the switch part to form a coil on the charging surface, the coil including the switch part in the ON state and the conductor in the conducting state that allows current to flow, the switch part in the ON state and the conductor in the conducting state forming a coil-shaped current path.

The present disclosed wireless charging device comprises:
a coil forming part in which a conductor and a plurality of semiconductor switching element groups including a plurality of semiconductor switching elements are regularly arranged in an in-plane direction, the coil forming part being applied to a charging surface on which a charging target is disposed; and
a control unit that controls the conductor between the adjacent semiconductor switching element groups to be in either a conducting state or a non-conducting state by controlling each of the semiconductor switching elements to be either an ON state or an OFF state.

The control unit is configured to control each of semiconductor switching elements t to form a coil on the charging surface, the coil including at least one of the semiconductor switching elements in the ON state and the conductor in the conducting state that allows current to flow, the at least one of the semiconductor switching elements in the ON state and the conductor in the conducting state forming a coil-shaped current path.

The present disclosed coil forming device comprises:
a coil forming part including:
   a plurality of element parts including a switch part; and
   conductors connecting adjacent the element parts, the coil forming part being applied to a coil forming target surface; and
a control unit that controls the conductors between the adjacent element parts to be in either a conducting state or a non-conducting state by controlling the switch part to be either an ON state or an OFF state.

The control unit is configured to control the switch part to form a coil on coil forming target surface, the coil including the switch part in the ON state and the conductor in the conducting state that allows current to flow, the switch part in the ON state and the conductor in the conducting state forming a coil-shaped current path.

According to the present invention, a coil of any size can be formed at any position in the in-plane direction on the surface where the coil is to be formed.

### BRIEF DESCRIPTION OF DRAWINGS

Fig. 1 is a functional block diagram illustrating the functions of a power transmission device and a power receiving device that is wirelessly charged by the power transmission device in accordance with a first embodiment of the present invention.
Fig. 2 is a functional block diagram showing an example of a configuration of a main functional circuit 25 of the power receiver.
Fig. 3A is a schematic plan view of a coil forming part.
Fig. 3B shows a cross-sectional configuration of a portion of a coil forming part.
Fig. 3C is an enlarged view of a region R1 in Fig. 3A.
Fig. 3D illustrates the coil formed in the coil forming part.
Fig. 4A illustrates a control state of switch parts of adjacent element parts.
Fig. 4B illustrates a control state of the switch parts of the adjacent element parts.
Fig. 4C illustrates a control state of the switch parts of the adjacent element parts.
Fig. 4D illustrates a control state of the switch parts of the adjacent element parts.
Fig. 5 is a flowchart showing a processing flow executed by a transmission control CPU.
Fig. 6 is a functional block diagram to illustrate the functions of the power transmission device and the power receiving device that is wirelessly charged by the power transmission device according to a second embodiment of the present invention.
Fig. 7 illustrates the operation of a power transmission system.
Fig. 8 illustrates the operation of the power transmission system.
Fig. 9 illustrates the operation of the power transmission system.
Fig. 10 is a flowchart showing a processing flow executed by the transmission control CPU.
Fig. 11 shows a schematic plan view of the coil forming part.
Fig. 12 is a flowchart showing a processing flow executed by the transmission control CPU.
Fig. 13 shows a schematic plan view of the coil forming part.
Fig. 14 shows a schematic plan view of the coil forming part.
Fig. 15A is a flowchart showing a processing flow executed by the transmission control CPU.
Fig. 15B is a flowchart showing a processing flow executed by the transmission control CPU.
Fig. 16 shows a schematic plan view of the coil forming part.
Fig. 17 shows a schematic plan view of the coil forming part.
Fig. 18 shows a schematic plan view of the coil forming part.
Fig. 19 shows a schematic plan view of the coil forming part.

### DETAILED DESCRIPTION OF THE EMBODIMENT

Each embodiment of the present invention will be described below with reference to the drawings. It should be noted that in all figures of the embodiments, identical or corresponding parts may be marked with the same symbol.

### <<First Embodiment>>

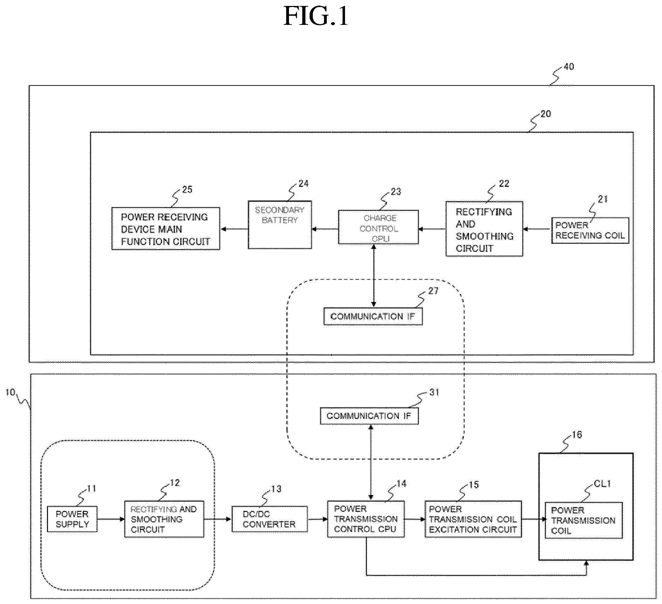

Fig. 1 is a schematic block diagram illustrating the functions of a power transmission device according to a first embodiment of the present invention and the functions of a mobile terminal 40 (e.g., a smartphone) including a power transmission device and a power receiving device that is wirelessly charged by the power transmission device.

The power transmission device 10 includes a power supply 11, a rectifier and smoothing circuit 12, a DC/DC converter 13, a power transmission control CPU 14, a power transmission coil excitation circuit 15, a coil forming part 16 where a power transmission coil CL1 is formed, and a communication IF 31. The power transmission device 10 may also be referred to as a "wireless charging device" or a "coil forming device" for convenience. The power transmission control CPU 14 may also be referred to as the "control unit" for convenience.

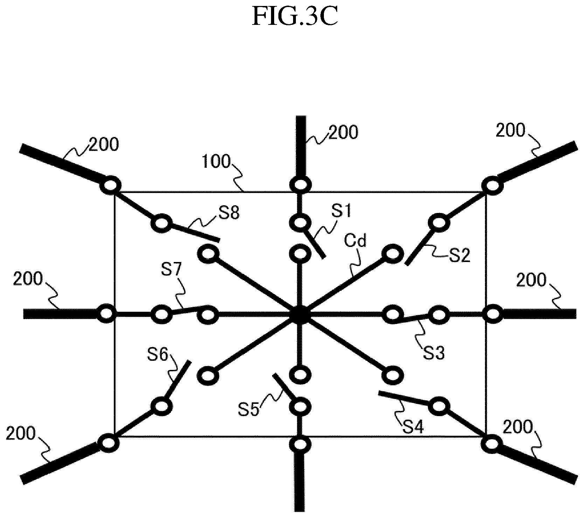

The power supply 11 is an AC power supply that provides alternating current. The rectifying and smoothing circuit 12 converts the alternating current supplied from the power supply 11 into direct current. The DC/DC converter 13 supplies the direct current to the power transmission control CPU 14 after it is stepped down. The power transmission control CPU 14 controls the current supplied to the power transmission coil excitation circuit 15. Furthermore, the power transmission control CPU 14 controls the switch part described below in the coil forming part 16. The coil forming part 16 is connected to the power transmission coil excitation circuit 15. As described later, the power transmission coil CL1 is formed in the coil forming part 16 (see Fig. 3C below).

The power transmission coil excitation circuit 15 converts direct current to alternating current and supplies alternating current to the power transmission coil CL1 in order to transmit power from the power transmission coil CL1 formed in the coil forming part 16 to a power receiving coil 21 by mutual induction action. The communication IF 31 is an interface for communication with an external device (a power receiving device 20).

The power receiving device 20 includes the power receiving coil 21, a rectifier and smoothing circuit 22, a charge control CPU 23, a secondary battery 24, and a power receiver main function circuit 25.

The power receiving coil 21 is connected to the rectifier and smoothing circuit 22. The rectifier and smoothing circuit 22 rectifies the alternating current of the power receiving coil 21 received from the power transmission coil CL1 by mutual dielectric action, then converts it to direct current and transmits it to the charge control CPU 23. The charge control CPU 23 controls the charge current and charge voltage, etc. supplied to the secondary battery 24 to charge the secondary battery 24. Furthermore, the charge control CPU 23 calculates the remaining charge capacity (charge rate) of the secondary battery 24. The secondary battery 24 is a rechargeable battery/secondary battery that can be charged and discharged, such as a lithium ion rechargeable battery. The secondary battery 24 may be an assembled battery comprising a plurality of rechargeable batteries.

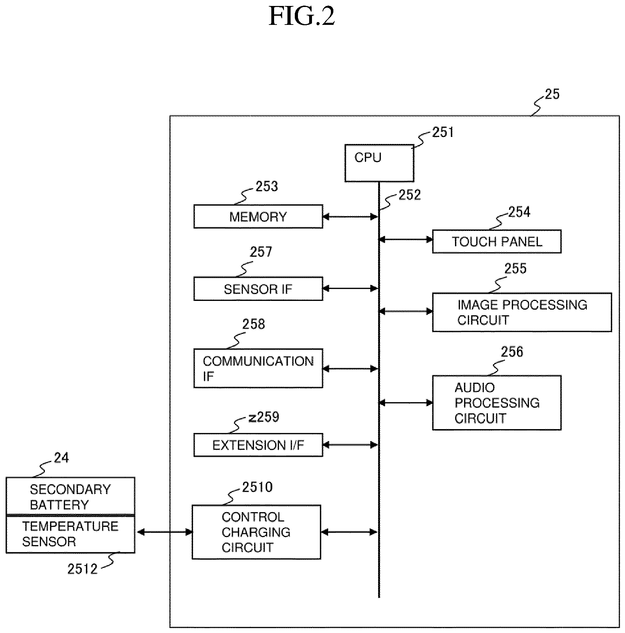

Fig. 2 is a functional block diagram showing an example configuration of the power receiver main function circuit 25. As shown in Fig, 2, the power receiver main function circuit 25 includes a CPU 251, a bus 252, a memory 253, a touch panel 254, an image processing circuit 255, an audio processing circuit 256, a sensor IF 257, a communication IF 258, an extension I/F 259, and a control charging circuit 2510.

The CPU loads various programs into the memory 253 and executes the programs loaded into the memory 253 to realize various functions of the mobile terminal 40.

The memory 253 is the main memory (e.g., RAM). In the memory 253, various programs executed by the CPU are loaded as described above, and data used by the CPU to execute various programs are temporarily stored.

The touch panel 254, also referred to as a touch screen, is a display capable of detecting the position of a touch on the screen.

The image processing circuit 255 is a circuit that performs processing to generate image data to be displayed on the touch panel 254.

The audio processing circuit 256 is a circuit that performs processing to generate audio to be output from the mobile terminals 40.

The sensor IF 257 is an interface for connecting to various sensors provided by mobile terminal 40.

The communication IF 258 is an interface for the mobile terminal 40 to communicate with the outside world.

The expansion IF 259 is an interface for extending the functionality of the mobile terminal 40.

The control charging circuit 2510 controls the charge current, charge voltage, etc. when charging the secondary battery 24.

A communication IF 27 is an interface for communication with an external device (power transmission unit 10). A temperature sensor 2512 is provided for the secondary battery 24 to detect the temperature of the secondary battery 24. The temperature sensor 2512 may be built into the secondary battery 24 or may be provided on the portable terminal 40 side.

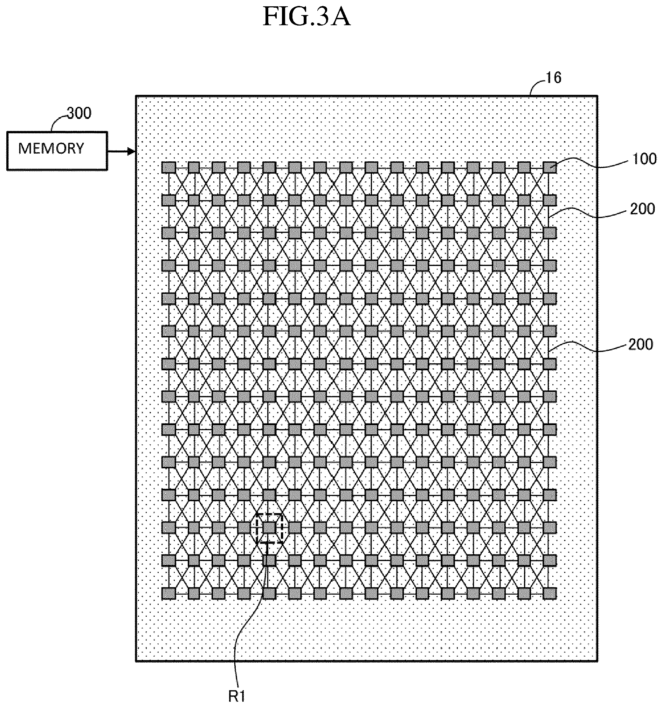

Fig. 3A shows an example configuration of the coil forming part 16. As shown in Fig. 3A, the coil forming part 16 includes a plurality of element parts 100, a copper strip 200 (conductor) disposed between the element parts 100, and a memory 300.

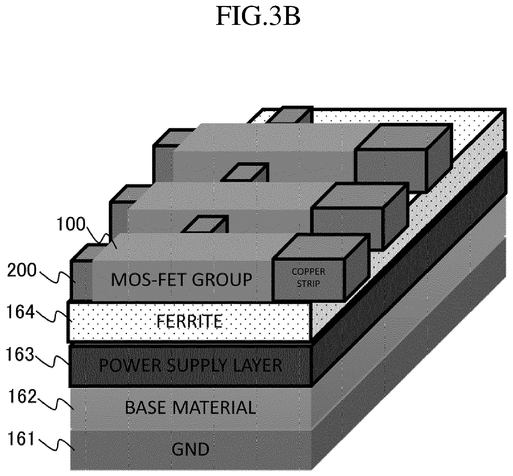

As shown in Fig. 3B, the coil forming part 16 has a structure consisting of a GND layer 161, a base layer 162, a power supply layer 163, a ferrite layer 164, a layer of element parts 100 (e.g., MOS-FET group) and the copper strip 200, in that order.

The element part 100 is, for example, a semiconductor switching element group including a plurality of semiconductor switching elements (e.g., MOS-FETs) formed by a semiconductor process. In the coil forming part 16, the copper strip 200 and the plurality of semiconductor switching element groups are regularly arranged in the in-plane direction.

On the ferrite layer 164, a plurality of semiconductor switching element groups (element parts 100) regularly arranged in a grid-like (grid point-like) configuration in the in-plane direction and a plurality of conductors (in this example, the copper strip 200) arranged between adjacent element parts 100 are formed. The plurality of element parts 100 are arranged so that a row of element parts 100 comprising a plurality of element parts 100 arranged at even intervals in the in-plane direction is lined up at even intervals in a direction orthogonal to the row direction of said row.

The ferrite layer 164 functions as a magnetic shield and is provided to form a magnetic field with the signal current, which is the current flowing through the power transmission coil CL1, by eliminating the influence of the magnetic field caused by the power current, which is the current flowing through the power supply layer 163.

Fig. 3C is an enlarged view of a region R1 in Fig. 3A. As shown in Fig. 3C, the element part 100 includes conductor Cd, a first switch part S1, a second switch part S2, a third switch part S3, a fourth switch part S4, a fifth switch part S5, a sixth switch part S6, a seventh switch part S7, and an eighth switch part S8. It should be noted that the first switch part S1 through the eighth switch part S8 are referred to as a "switch part S" when there is no need to distinguish between them.

The first switch part S1, the conductor Cd, and the fifth switch part S5 are arranged on a straight line connecting the midpoints of each of the opposing first and third sides of the element part 100.

The third switch part S3, the conductor Cd, and the seventh switch part S7 are located on a straight line connecting the midpoints of each of the opposing second and fourth sides of the element part 100.

The second switch part S2, the conductor Cd and the sixth switch part S6 are located on the first diagonal of the element part 100.

The eighth switch part S8, the conductor Cd and the fourth switch part S4 are located on the second diagonal of the element part 100.

The conductor Cd is, for example, a copper wire, and the switch part S is, for example, a semiconductor switching device (e.g., MOS-FET). The switch S may be a switching device using materials other than semiconductors (e.g., carbon nanotubes, graphene, etc.).

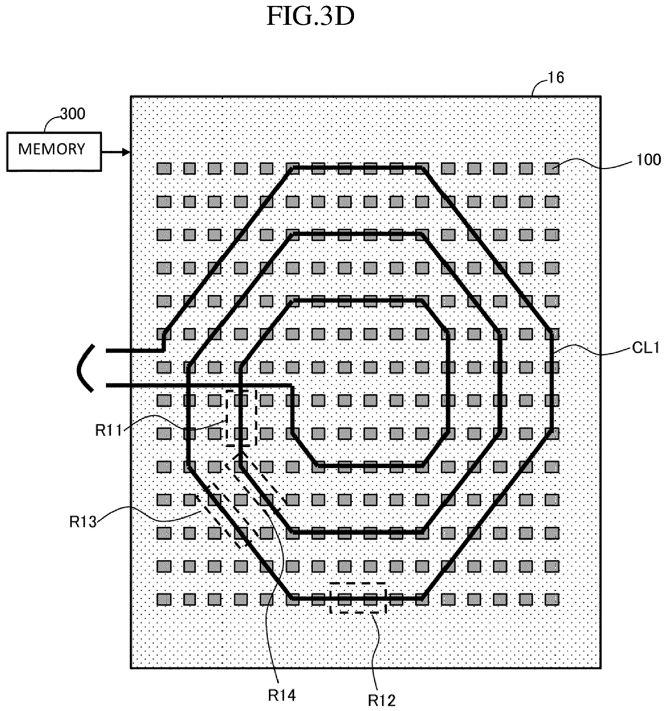

As shown in Fig. 3D, each switch S of each of the plurality of element parts 100 is set to either a conducting (ON) state or a non-conducting (OFF) state, and thereby, the copper strip 200 between the adjacent element parts 100 become in either a conducting state or a non-conducting state. The copper strip 200 in the conducting state is in a state that allows current to flow. The copper strip 200 in the non-conducting state is not in a state that allows current to flow. This forms a coil (power transmission coil CL1) including the switch part S in the ON state and the copper strips 200 in the conducting state that form a coil-shaped current path. In Fig. 3D, the copper strip 200 is omitted.

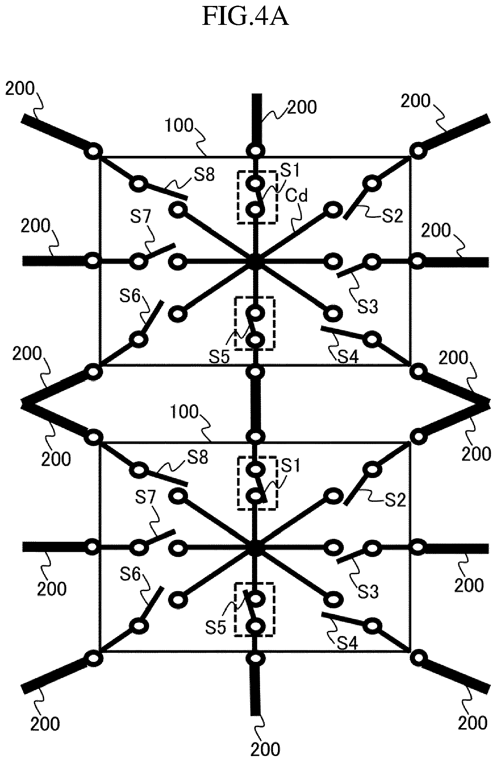

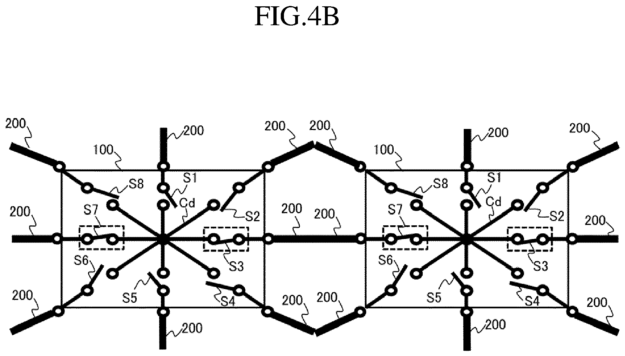

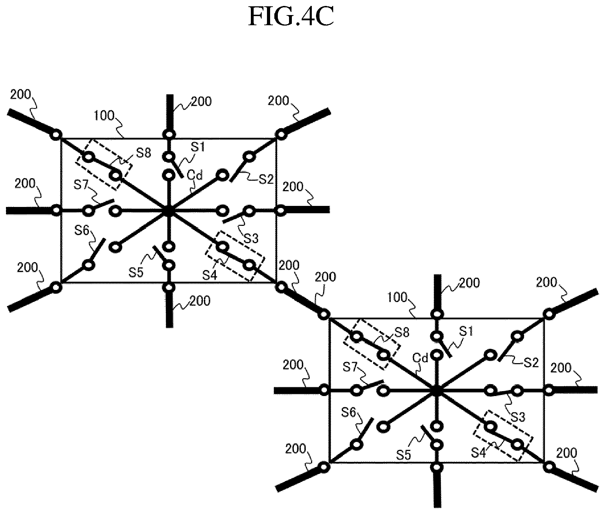

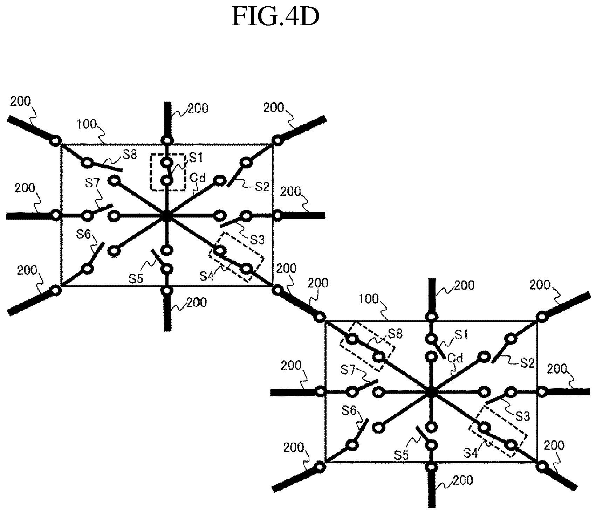

Fig. 4A is an enlarged view of a region R11 in Fig. 3D, Fig. 4B is an enlarged view of a region R12 in Fig. 3D, Fig. 4C is an enlarged view of a region R13 in Fig. 3D, and Fig. 4D is an enlarged view of a region R14 in Fig. 3D.

As shown in Fig. 4A, the current path that allows longitudinal linear current flow in the region R11 in Fig. 3D is formed by setting the first switch S1 and the fifth switch S5 to ON and the second switch S2 through the fourth switch S4 and the sixth switch S6 through the eighth switch S8 to OFF in each of the vertically adjacent element parts 100.

As shown in Fig. 4B, the current path that allows a linear current to flow in the lateral direction in the region R12 in Fig. 3D is formed by setting the third switch S3 and the seventh switch S7 to ON and the first switch S1, the second switch S2, and the eighth switch S8, as well as the fourth switch S4 through the sixth switch S6 to OFF in each of the adjacent element parts 100 in the lateral direction.

As shown in Fig. 4C, the current path that allows the oblique linear current of the region R13 in Fig. 3D to flow is formed by setting the fourth switch S4 and the eighth switch S8 to ON and the first through third switches S1 to S3, and S5 to S7 to OFF in each of the adjacent element parts 100 in the oblique direction.

As shown in Fig. 4D, the current path that allows the folded current of the region R14 in Fig. 3D to flow is formed by setting the first switch S1 and the fourth switch S4 to ON, the second switch S2 and the third switch S3, the fifth switch S5 through the eighth switch S8 to OFF in one of the 100 adjacent element parts 100 in the diagonal direction.

In other areas, each of the first through eighth switch parts S1 and S8 of each element part 100 is controlled to be either ON or OFF to correspond to the shape of the power transmission coil CL1.

These form a coil-shaped current path through which current can flow and form the power transmission coil CL1.

The memory 300 stores switch information that is associated with each other and includes switch part identification information for identifying each switch part S and switch state information that indicates the position of each switch part S and whether each switch part S is in the ON or OFF state. When a switch part S is in a conducting state, the switch state information corresponding to that switch part S is set to ON, and when a switch part S is in a non-conducting state, the switch state information corresponding to that switch part S is set to OFF.

Furthermore, a coil shape management table is stored in the memory 300, in which multiple shapes and sizes of coils and their corresponding switch identification information and switch state information are stored in association with each other.

The power transmission control CPU 14 refers to the switch information and coil shape management table stored in the memory 300 and controls each switch part S to either ON or OFF state in accordance with the switch state information corresponding to an arbitrary position and an arbitrary coil shape and size, to thereby form the power transmission coil CL1 having the arbitrary shape and size at an arbitrary position. In the first embodiment, the power transmission coil CL1 of any predetermined shape and size is formed at any predetermined position.

### <Specific Operation>

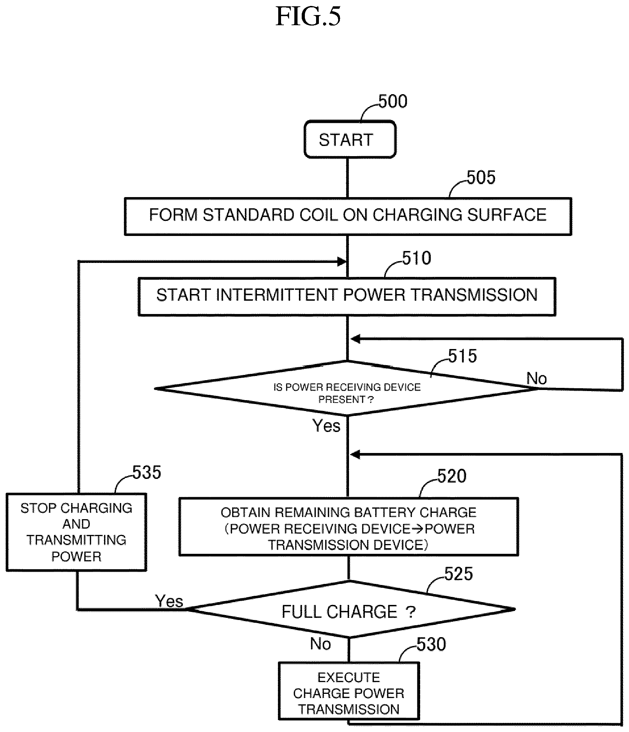

Fig. 5 is a flowchart showing the processing flow executed by the power transmission control CPU 14. The power transmission control CPU 14 starts the processing from step 500 and proceeds to step 505 to control each switch part S to form a standard coil on the charging surface (i.e., one main surface of the coil forming part 16) on which the power receiving device 20 is placed. The standard coil is a coil having a predetermined shape and size set in advance, which in this example is the power transmission coil CL1 of the shape and size shown in Fig. 3D.

The power transmission control CPU 14 then proceeds to step 510 to start intermittent power transmission and proceeds to step 515 to determine whether or not the power receiving device 20 is present on the charging surface. This determination is executed based on the Q value and the availability of communication by the communication IF 27 and the communication IF 31.

When the power receiving device 20 is not present on the charging surface, the power transmission control CPU 14 makes a "No" determination at step 515 and executes the process of step 515 again.

When the power receiving device 20 is present on the charging surface, the power transmission control CPU 14 makes a "Yes" determination at step 515 and proceeds to step 520 to obtain the remaining battery charge (remaining charge of the secondary battery 24) from the power receiving device 20 and proceeds to step 525.

At step 525, the power transmission control CPU 14 determines whether the secondary battery 24 of the power receiving device 20 is fully charged based on the remaining battery capacity obtained at step 520.

When the secondary battery 24 of the power receiving device 20 is not fully charged, the power transmission control CPU 14 makes a "No" determination at step 525 and proceeds to step 530 to execute charge transmission (power transmission for charging) and returns to step 520.

In contrast, when the secondary battery 24 of the power receiving device 20 is fully charged, the power transmission control CPU 14 makes a "Yes" determination at step 525 and proceeds to step 535 to stop charging and transmitting power and returns to step 510.

### <Effect>

As explained above, the power transmission device 10 according to the first embodiment of the present invention can form the power transmission coil CL1 of any predetermined shape and size at any predetermined position by controlling each switch part S of the element part 100 of the coil forming part 16. This allows the power transmission device 10 to efficiently perform wireless charging.

### <<Second Embodiment>>

This section describes the power transmission device 10 according to the second embodiment of the present invention. The power transmission device 10 according to the second embodiment is differs from the power transmission device 10 according to the first embodiment only in the following points.

The power transmission device 10 according to the second embodiment searches for an efficient position for power supply and charges the power receiving device 20 at the searched position.

The following explanation focuses on these differences.

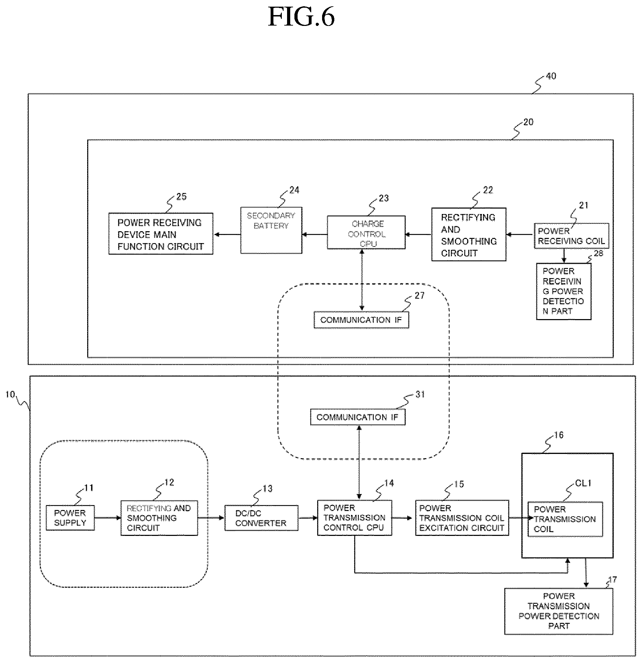

Fig. 6 is a schematic block diagram illustrating the functions of the power transmission device 10 and the power receiving device 20 that is wirelessly charged by the power transmission device 10 according to the second embodiment of the present invention.

As shown in Fig. 6, the power transmission system 10 is equipped with a power transmission power detection part 17. The power transmission power detection part 17 detects the transmitted power. Other than the above points, the configuration of the power transmission device 10 is the same as that of the power transmission device 10 shown in Fig. 1. The power receiving device 20 is equipped with a power receiving power detection part 28. The power receiving power detection part 28 detects the power received. The power transmission device 10 calculates the efficiency of power feeding by dividing the power received by the power transmitted. Other than the above points, the configuration is similar to that of the power receiving device 20 shown in Fig. 1.

### <Overview>

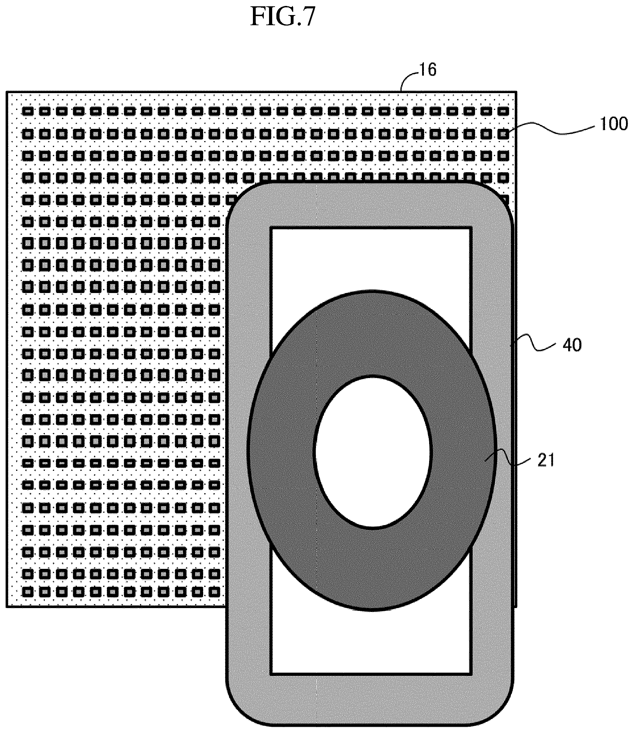

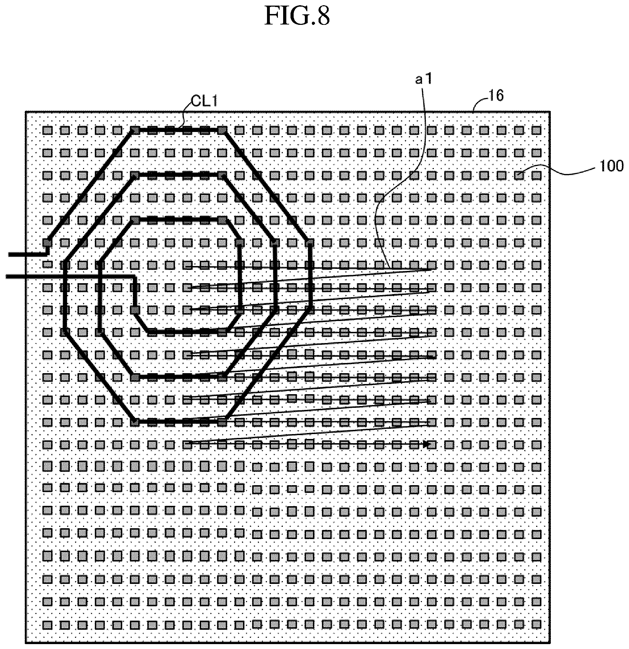

An overview of the operation of the power transmission device 10 according to the second embodiment is described. Fig. 7 illustrates the operation of the power transmission device 10. In Fig. 7, the copper strip 200 of the coil forming part 16 is omitted (the same in Figs. 8 through 9).

As shown in Fig. 7, a portable terminal 40 (smartphone) with the power receiving device 20 including the power receiving coil 21 is placed against the lower right area of the charging surface of the coil forming part 16.

In this case, the power transmission device 10 forms the power transmission coil CL1 in the upper left area, as shown in Fig. 8. The power transmission device 10 then moves the power transmission coil CL1 along the arrow a1 by controlling the switch part S to measure the efficiency of the power supply of the power transmission coil CL1 and search for a position where efficient wireless charging is possible.

If the efficiency of power feeding is not sufficient, the power transmission device 10 controls each switch part S of each element part 100 so that the power transmission coil CL1 moves a predetermined distance (e.g., the distance between element parts 100) in a predetermined direction of movement (e.g., right) while maintaining the shape of the power transmission coil CL1.

For example, the power transmission device 10 sets the same ON/OFF state for each of the switch parts S1 to S8 of each of the element parts 100 adjacent in the direction of movement as the ON/OFF state of each of the first switch part S1 to the eighth switch S8 of each element part 100 before movement, to thereby be able to move the power transmission coil CL1 by a predetermined distance in a predetermined movement direction while maintaining its shape.

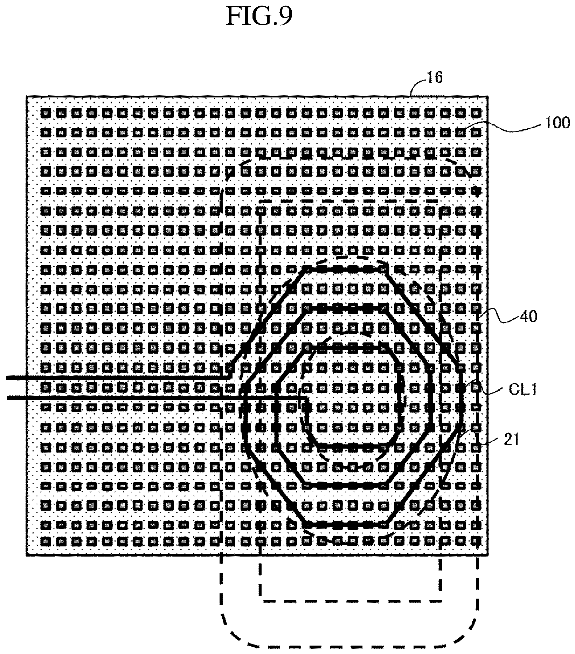

The power transmission device 10 then measures the efficiency of power feeding at the position where the power transmission coil CL1 is moved by a predetermined distance in the predetermined direction of movement. If the efficiency of power feeding is not sufficient, the power transmission device 10 controls the switch part S of each element part 100 so that the power transmission coil CL1 moves a predetermined distance in the predetermined movement direction while maintaining the shape of the power transmission coil CL1. The power transmission device 10 repeats the above operation until the efficiency of power feeding is determined to be sufficient (within an acceptable range). As a result, as shown in Fig. 9, the power transmission coil CL1 can be formed at the position where the efficiency of power feeding is judged to be sufficient.

### <Specific Operation>

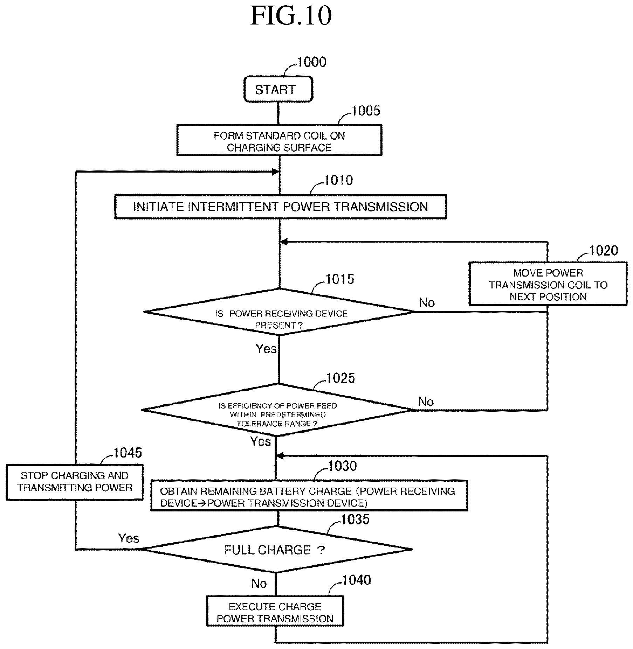

Fig. 10 is a flowchart showing the processing flow executed by the transmission control CPU 14. The power transmission control CPU 14 starts processing from step 1000, executes steps 1005 and 1010 described below in sequence, and then proceeds to step 1015.

Step 1005: The power transmission control CPU 14 forms a standard coil (power transmission coil CL1) at a predetermined position in the upper left corner of the charging surface.

Step 1010: The power transmission control CPU 14 initiates intermittent power transmission.

The power transmission control CPU 14 proceeds to step 1015 to determine whether the power receiving device 20 is present on the charging surface. When the power receiving device 20 is not present on the charging surface, the power transmission control CPU 14 makes a "No" determination at step 1015 and proceeds to step 1020 to move the power transmission coil CL1 to the next predetermined position. That is, the power transmission control CPU 14 controls ON and OFF of the first switch part S1 through the eighth switch part S8 of each element part 100 so as to move the power transmission coil CL1 to the next predetermined position. Thereafter, the power transmission control CPU 14 returns to step 1015 and again performs the process of step 1015.

When the power receiving device 20 is present on the charging surface, the power transmission control CPU 14 makes a "Yes" determination at step 1015 and proceeds to step 1025 to obtain the power detected by the power receiving power detection part 28 by communicating with the charge control CPU 23 of the power receiving device 20 via the communication IF 27 and the communication IF 31. The power transmission control CPU 14 calculates the efficiency of the power feed based on the power detected by the power transmission power detection part 17 and the power receiving power detection part 28, and determines whether the efficiency of the power feed is within a predetermined tolerance range (e.g., whether it is a predetermined threshold value or under).

When the efficiency of the power feed is not within the specified tolerance, the power transmission control CPU 14 makes a "No" determination at step 1025 and proceeds to step 1020, executes the previously described step 1020, and then returns to step 1015.

When the efficiency of power supply is within the predetermined tolerance range, the power transmission control CPU 14 makes a "Yes" determination at step 1025 and proceeds to step 1030 to obtain the remaining battery capacity from the power receiving device 20 and proceeds to step 1035.

The power transmission control CPU 14 determines whether the secondary battery 24 of the power receiving device 20 is fully charged based on the remaining battery capacity obtained in step 1030.

When the secondary battery 24 of the power receiving device 20 is not fully charged, the power transmission control CPU 14 makes a "No" determination at step 1035 and proceeds to step 1040 to execute charge power transmission and returns to step 1030.

In contrast, when the secondary battery 24 of the power receiving device 20 is fully charged, the power transmission control CPU 14 makes a "Yes" determination at step 1035 and proceeds to 1045 to stop charging and transmitting power and returns to step 1010.

### <Effect>

As explained above, the power transmission device 10 according to the second embodiment of the invention can form the power transmission coil CL1 in a position where it can be efficiently charged. As a result, the power transmission device 10 can efficiently perform wireless charging.

### <<Third Embodiment>>

This section describes the third embodiment of the invention, a power transmission device 10. The power transmission device 10 differs from the transmission system 10 of the first embodiment only in the following points.

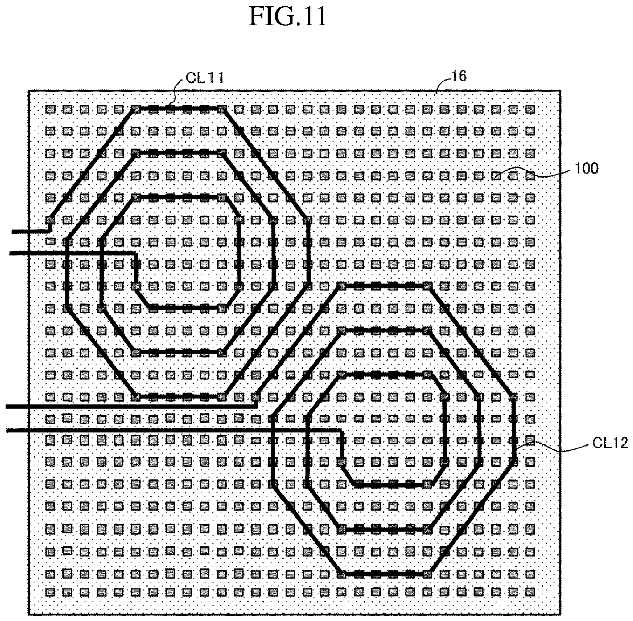

The power transmission device 10 of the third embodiment moves the power transmission coil on the charging surface to search for the power receiving device 20 that is present on the charging surface. After completing the search for the power receiving device 20, the power transmission device 10 forms a power transmission coil at the location where the power receiving device 20 is detected. In this case, for example, if multiple (e.g., two) power receiving devices 20 are detected, as shown in Fig. 11, a power transmission coil CL11 and a power transmission coil CL12 are formed at each location where the power receiving device 20 is detected. In Fig. 11, the copper strip 200 is omitted.

The following explanation focuses on these differences.

### <Specific Operation>

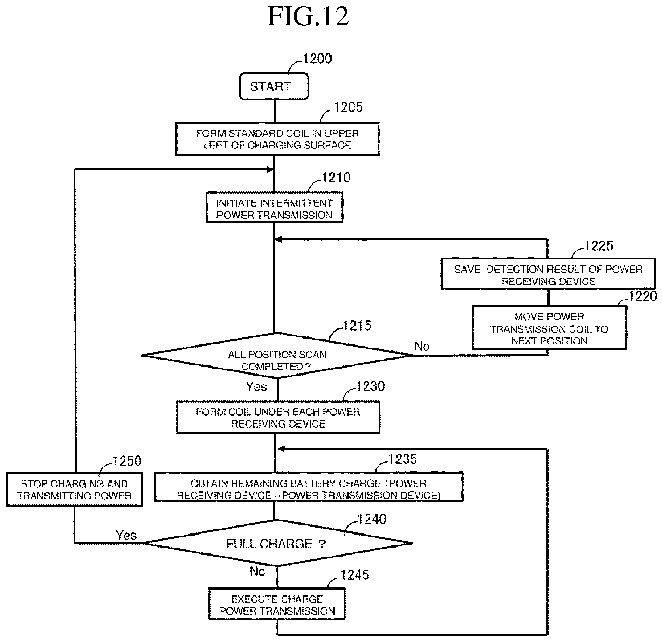

Fig. 12 is a flowchart showing the processing flow executed by the power transmission control CPU 14. The power transmission control CPU 14 starts processing at step 1200, executes steps 1205 and 1210 described below in sequence, and then proceeds to step 1215.

Step 1205: The power transmission control CPU 14 forms a standard coil at a predetermined position in the upper left corner of the charging surface. The standard coil is a coil having a predetermined shape and size, which in this example is the power transmission coil CL11 shown in Fig. 11.

Step 1210: The power transmission control CPU 14 starts intermittent power transmission and checks the Q value of the power transmission coil CL11 and the availability of communication by the communication IF 27 and the communication IF 31.

The power transmission control CPU 14 proceeds to step 1215 to determine whether or not scanning of all positions of the charging surface has been completed. It should be noted that the "scanning of all positions of the charging surface" here refers to checking whether or not the power receiving device 20 is present on the charging surface by sequentially shifting the coil formation positions on the charging surface by a predetermined amount in a predetermined direction, measuring the Q value of the power transmission coil CL11, and comparing it with a judgment value.

When scanning of all positions of the charging surface is not completed, the power transmission control CPU 14 makes a "No" determination at step 1215, executes steps 1220 and 1225 described below, and then returns to step 1215 again to the process of step 1215.

Step 1220: The power transmission control CPU 14 moves the forming position of the power transmission coil CL11 to the next predetermined position. That is, the power transmission control CPU 14 controls ON and OFF of the first switch part S1 through the eighth switch part S8 of each element part 100 to move the power transmission coil CL11 to the next predetermined position.

Step 1225: The power transmission control CPU 14 stores the detection result of the power receiving device 20 in the memory 300.

When scanning of all positions of the charging surface is completed, the power transmission control CPU 14 makes a "Yes" determination at step 1215, executes steps 1230 and 1235 described below in sequence, and then proceeds to step 1240.

Step 1230: The power transmission control CPU 14 forms the power transmission coil CL11 at the position where the power receiving device 20 is detected based on the power receiving device detection result. That is, the power transmission control CPU 14 controls ON and OFF of the first switch part S1 through the eighth switch part S8 of each element part 100 so as to move the power transmission coil CL11 to a predetermined position. At this time, when multiple power receiving devices 20 are detected, the power transmission coil is formed at the respective positions where the power receiving devices 20 are detected.

Step 1235: The power transmission control CPU 14 obtains the remaining battery charge from the power receiving device 20.

The power transmission control CPU 14 proceeds to step 1240 to determine whether the secondary battery 24 of the power receiving device 20 is fully charged based on the remaining battery charge obtained in step 1235.

When the secondary battery 24 of the power receiving device 20 is not fully charged, the power transmission control CPU 14 makes a "No" determination at step 1240 and proceeds to step 1245 to execute charge transmission and returns to step 1235.

In contrast, when the secondary battery 24 of the power receiving device 20 is fully charged, the power transmission control CPU 14 makes a "Yes" determination at step 1240 and proceeds to 1250 to stop charging and transmitting power and returns to step 1210.

### <Effect>

As explained above, the power transmission device 10 of the third embodiment of the present invention can have a power transmission coil formed at each location where a plurality of 20 power receiving devices are detected. This allows the power transmission device 10 to perform wireless charging efficiently.

### <<Fourth Embodiment>>

This section describes the fourth embodiment according to the present invention.

The transmission system 10 differs from the transmission system 10 according to the second embodiment only in the following points.

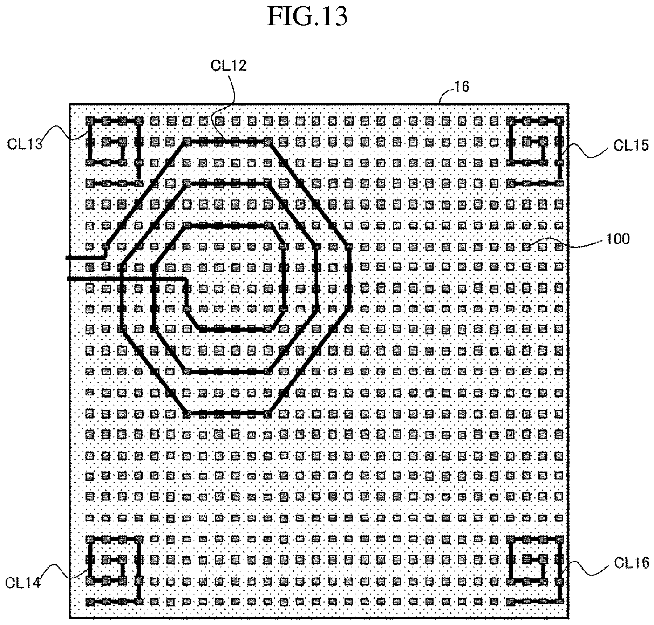

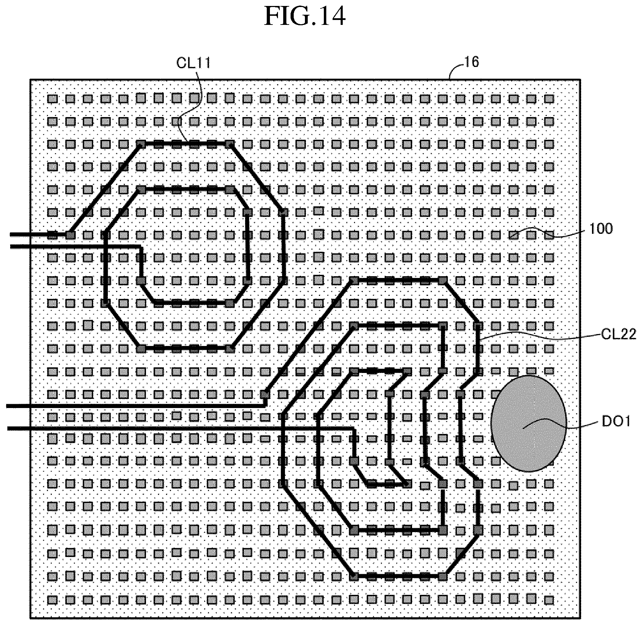

The power transmission device 10 according to the fourth embodiment moves the power transmission coil at the charging surface to search for the power receiving device 20 present at the charging surface. The power transmission device 10 forms the transmission coil at the location where the power receiving device 20 is detected. Furthermore, the power transmission device 10 according to the fourth embodiment changes the size and shape of the power transmission coil as necessary to form a power transmission coil of the size and shape with the highest power supply efficiency. As a result, for example, as shown in Fig. 13 and Fig. 14, multiple power transmission coils of different sizes are formed, or as shown in Fig. 14, a coil CL22 of a shape that avoids foreign matter DO1 present on the charging surface is formed. In Fig. 13 and Fig. 14, the copper strip 200 is omitted.

The following explanation focuses on these differences.

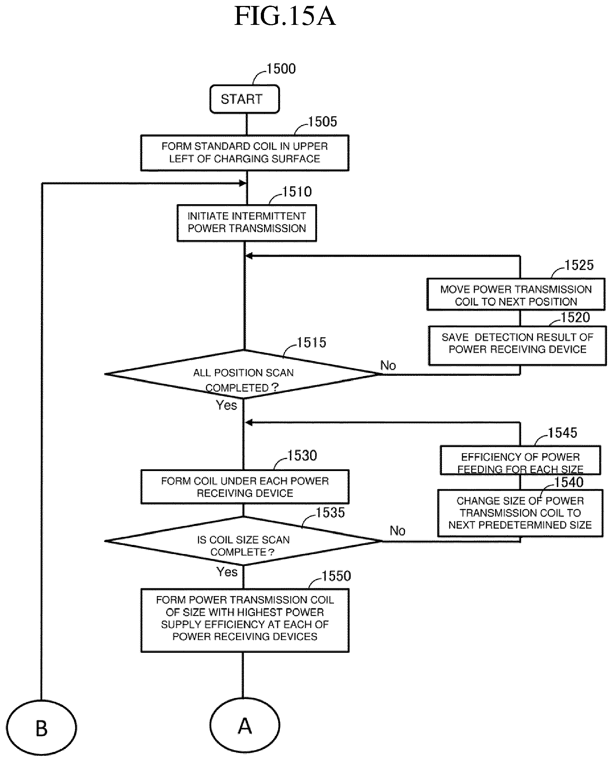

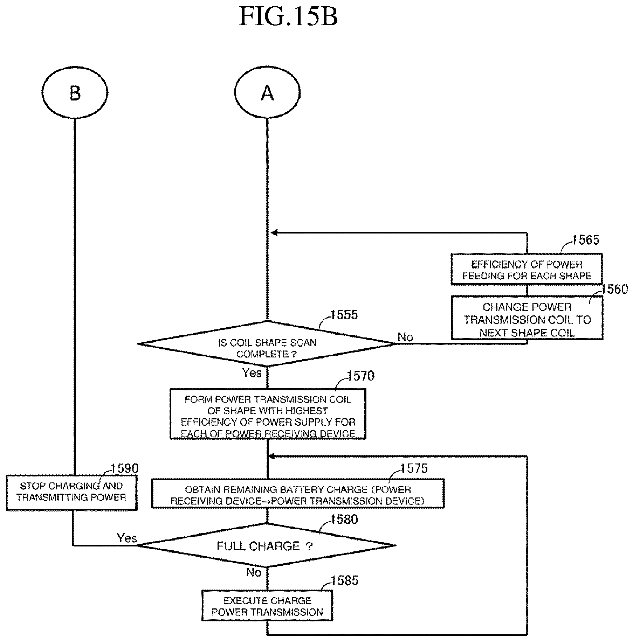

Fig. 15A and Fig. 15B are flowcharts showing the processing flow executed by the power transmission control CPU 14. The power transmission control CPU 14 starts processing from step 1500 and executes steps 1505 and 1510 described below in sequence, then proceeds to step 1515.

Step 1505: The power transmission control CPU 14 forms a standard coil (power transmission coil CL11) at a predetermined position in the upper left corner of the charging surface.

Step 1510: The power transmission control CPU 14 initiates intermittent power transmission.

The power transmission control CPU 14 proceeds to step 1515 to determine whether the scanning of all positions of the charging surface is complete. When scanning of all positions of the charging surface is not completed, the power transmission control CPU 14 makes a "No" determination at step 1515 and executes the processing of steps 1520 and 1525 described below, then returns to step 1515 again and executes the processing of step 1515.

Step 1520: The power transmission control CPU 14 stores the detection result (detection position) of the power receiving device 20 in the memory 300.

Step 1525: The power transmission control CPU 14 moves the forming position of the power transmission coil CL11 to the next position. That is, the power transmission control CPU 14 controls ON and OFF of the first switch part S1 through the eighth switch part S8 of each element part 100 so as to move the power transmission coil CL11 to the specified next position.

When scanning of all positions of the charging surface is completed, the power transmission control CPU 14 makes a "Yes" determination at step 1515, executes step 1530 described below, and then proceeds to step 1535.

Step 1530: The power transmission control CPU 14 forms a power transmission coil CL11 at the position where the power receiving device 20 is detected based on the power receiving device detection result. At this time, if multiple power receiving devices 20 are detected, the power transmission coil is formed at each position where a power receiving device 20 is detected.

The power transmission control CPU 14 proceeds to step 1535 to determine whether the coil size scan is complete. The "coil size scan" here refers to changing the coil size (coil size) in turn to a predetermined size and measuring (examining) the efficiency of power feeding in turn. When the coil size scan is not completed, the power transmission control CPU 14 makes a "No" determination at step 1535 and returns to step 1530 after performing steps 1540 and 1545 described below in sequence.

Step 1540: The power transmission control CPU 14 changes the size of the power transmission coil CL11 to the next predetermined size.

Step 1545: The power transmission control CPU 14 obtains the detection result of the power receiving device 20 and stores the efficiency of power feeding for each size in the memory 300.

When the coil size scan is complete, the power transmission control CPU 14 makes a "Yes" determination at step 1535 and proceeds to step 1550 to form a power transmission coil of the size with the highest power supply efficiency at each of the power receiving devices 20 based on the efficiency of power supply for each size stored in the memory 300.

The power transmission control CPU 14 then proceeds to step 1555 in Fig. 15B to determine whether the coil shape scan is complete. The "coil shape scan" here refers to changing the coil shape (circular, square, elliptical, semicircular, and crescent-shaped) in turn to a predetermined shape and measuring (examining) the efficiency of the power feed in turn.

When the coil shape scanning is not completed, the power transmission control CPU 14 makes a "No" determination at step 1555, executes steps 1560 and 1565 described below in sequence, and then returns to step 1555.

Step 1560: After measuring the efficiency of the power feed, the power transmission control CPU 14 changes the shape of the power transmission coil to the next predetermined shape (different from the previous shape). For example, the power transmission control CPU 14 controls the ON and OFF of the first switch part S1 through the eighth switch part S8 of each element part 100 to change the power transmission coil to the next predetermined shape.

Step 1565: The power transmission control CPU 14 obtains the detection results of the efficiency of the power feed for each shape and stores the efficiency of the power feed for each shape in the memory 300.

When the coil shape scanning is then complete, the power transmission control CPU 14 makes a "Yes" determination at step 1555, executes steps 1570 and 1575 described below in sequence, and then proceeds to step 1580.

Step 1570: The power transmission control CPU 14 forms a power transmission coil of the shape with the highest efficiency of power supply for each of the power receiving devices 20 based on the efficiency of power supply for each shape stored in the memory 300.

Step 1575: The power transmission control CPU 14 obtains the remaining battery charge from the power receiving device 20.

The power transmission control CPU 14 proceeds to step 1580 to determine whether the secondary battery 24 of the power receiving device 20 is fully charged based on the remaining battery charge obtained at step 1575.

When the secondary battery 24 of the power receiving device 20 is not fully charged, the power transmission control CPU 14 makes a "No" determination at step 1580 and proceeds to step 1585 to execute charge power transmission and returns to step 1575.

In contrast, when the secondary battery 24 of the power receiving device 20 is fully charged, the power transmission control CPU 14 makes a "Yes" determination at step 1580 and proceeds to 1590 to stop charging and transmitting power and returns to step 1510 of Fig. 15A.

By executing the process flow of Fig. 15A and Fig. 15B, the power transmission device 10 can form one or more power transmission coils of various shapes with good power supply efficiency on the charging surface, depending on the location and number of the power receiving devices 20 on the charging surface.

### <Effect>

As explained above, the power transmission device 10 according to the fourth embodiment of the present invention can form a power transmission coil of a shape and size that enables efficient wireless charging at each location where a plurality of power receiving devices 20 are detected, thus enabling more efficient wireless charging. This allows the power transmitter 10 to improve the efficiency of power supply when charging the smaller power receiving device 20. Furthermore, the power transmitter device 10 can form a power transmission coil on the charging surface with a coil shape that avoids foreign matter DO1.

### <<Fifth Embodiment>>

This section describes the power transmission apparatus 10 according to the fifth embodiment of the present invention. The power transmission device 10 according to the fifth embodiment differs from the power transmission device 10 according to the first embodiment only in the following points.

The power transmitter 10 according to the fifth embodiment has a coil CL31 for NFC (hereinafter referred to as "NFC coil CL31") on the charging surface. NFC is Near Field Communication.

The following explanation focuses on these differences.

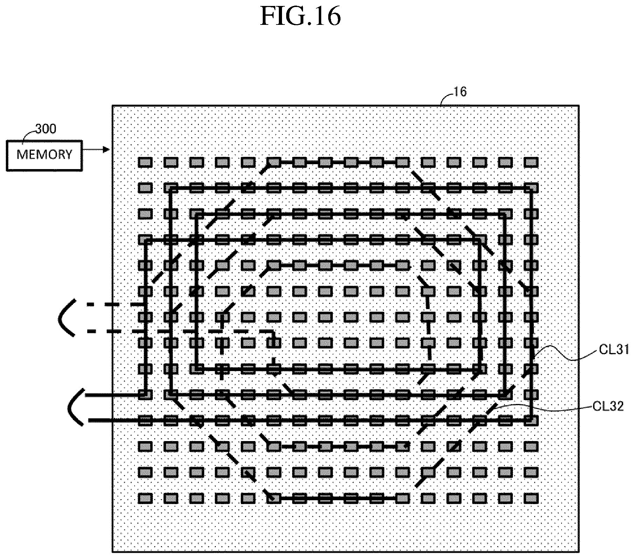

Fig. 16 shows a plan view of an example configuration of the coil forming part 16. in Fig. 16, the copper strip 200 is omitted. As shown in Fig. 16, the power transmission device 10 controls each switch part S of each element part 100 to form the NFC coil CL31 and the power transmission coil CL32 for power transmission. The power transmission device 10 may form only the NFC coil CL31 when communicating with the NFC device and only the power transmission coil CL32 when transmitting power.

Although not shown in the figure, the power transmission device 10 may form the NFC coil CL31 and the power transmission coil CL32 side by side by controlling each switch part S. Furthermore, the power transmission coil CL32 may be formed in a shape that avoids the area overlapping the NFC device (NFC card).

### <Effect>

As explained above, the power transmission device 10 according to the fifth embodiment of the present invention can form an NFC coil CL31 for NFC in addition to the power transmission coil CL32 on the charging surface.

### <<Modified Example>>

The present invention is not limited to the above embodiments, and various variations may be employed within the scope of the present invention. Furthermore, the above embodiments can be combined with each other as long as they do not depart from the scope of the present invention.

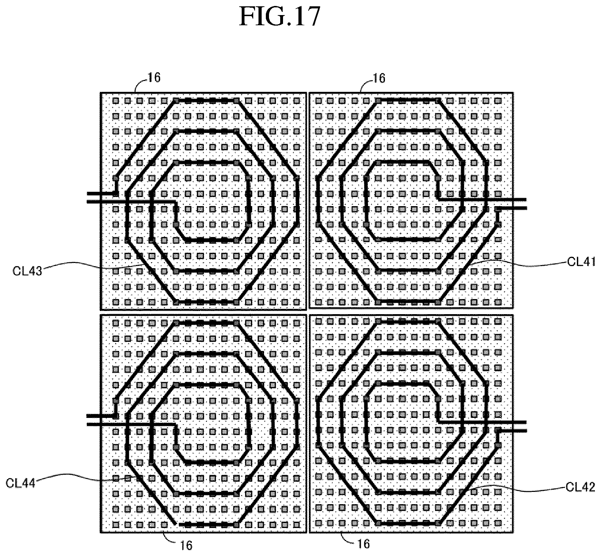

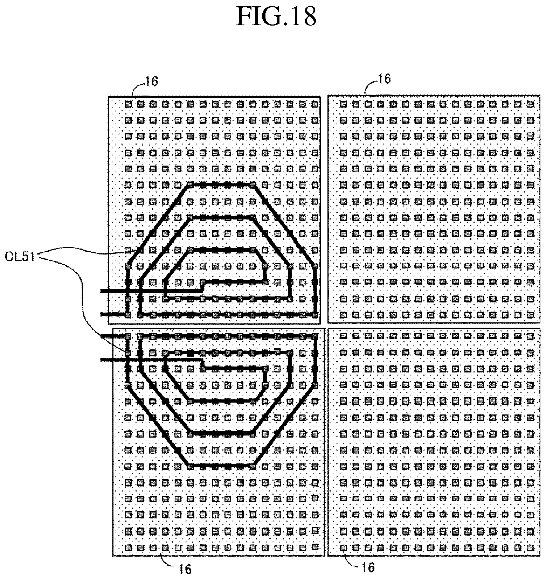

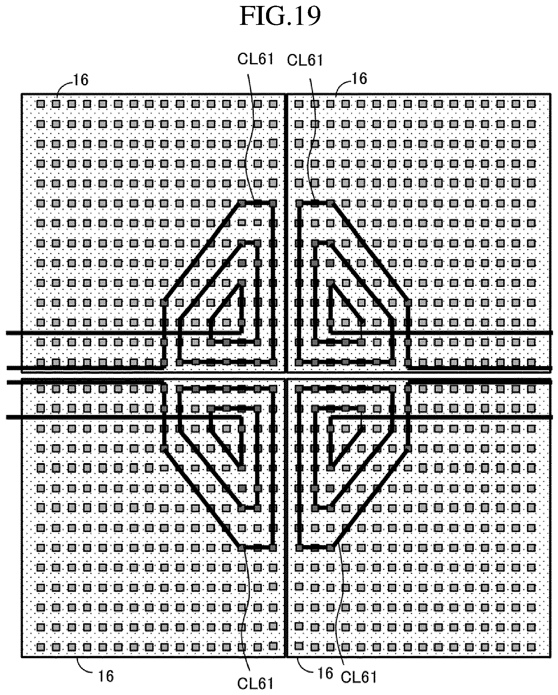

In each of the above embodiments, a single charging surface may be formed with multiple coil forming parts 16, as shown in Fig. 17. This allows the charging area to be extended. In this case, for example, one transmission coil CL41 (CL42, CL43, or CL44) may be formed in each coil forming parts 16 by controlling each switch part S. In Fig. 17, the copper strip 200 is omitted (the same in Fig. 18 and Fig. 19).

As shown in Fig. 18, for example, one transmission coil CL51 may be formed across the boundary between two coil forming parts 16 by controlling each switch part S. As shown in Fig. 19, one transmission coil CL61 may be formed across the boundary between four adjacent coil forming parts 16 by controlling each switch part S. One transmission coil CL61 may be formed to span the boundary between the coil forming parts 16.

In each of the above embodiments, in order to stabilize the Q-value of the coil for power transmission at the end of the coil forming part 16, along with the coil for power transmission that executes power transmission to the charging surface, an uncharged coil (e.g., a coil in the same shape and the same size as the power transmission coils CL13 to CL16 in Fig. 13) may be formed at the peripheral edge (in the region near the peripheral edge) of the charging surface and the same size) may be formed at the same location as the power transmission coils CL13 through CL16 in Fig. 13.

In each of the above embodiments, the power receiving device 20 may be equipped with a coil forming part 16, so that the coil forming part 16 is applied to the power receiving surface. In this case, only the power receiving device 20 may be equipped with the coil forming part 16. The coil forming part 16 is thin and contributes to the low profile of the power receiving device 20. In addition, by making the power receiving coil 21 and the power transmission coil CL1 completely the same shape, the leakage magnetic field is minimized and further efficiency improvement can be expected.

In each of the above embodiments, a bypass current path may be formed with the element part 100 adjacent to the NG element part as a treatment when an NG element part is created. That is, in each of the above embodiments, when the element part 100 (NG element part) in which the switch part S does not function is created, a power transmission coil may be formed using the element part 100 adjacent to the NG element part instead of that element part 100.

In each of the above embodiments, some or all of the copper strips 200 may be shorted to GND so that unused copper strips 200 do not generate magnetic effects.

In the second and third embodiments above, when a plurality of power receiving devices 20 are detected and a plurality of power transmission coils are formed, each of the plurality of power transmission coils may be controlled in one of the following states: transmitting power to the power receiving devices 20, and stopping power transmission to the power receiving devices 20.

In this case, for example, charging may be controlled as described below.

All of the multiple transmission coils may be controlled to transmit power to the power receiving devices 20, so that power is transmitted simultaneously from the multiple transmission coils and the multiple power receiving devices 20 are charged simultaneously.

Only one of the multiple power transmission coils may be in the state of transmitting power to the power receiving devices 20, so that the multiple power receiving devices 20 are charged to a fully charged state in turn by switching one of the power transmission coils in the power transmission state each time the power receiving devices 20 to be transmitted are fully charged.

The multiple power receiving devices 20 may be charged to a fully charged state in turn, with only one of the multiple power transmission coils in the state of transmitting power to the power receiving device 20, switching one coil in the state of transmitting power each time the power receiving device 20 to be transmitted is charged by a predetermined amount. This can suppress a decrease in the transmitted power due to a rise in the temperature of the power receiving devices 20 during charging, thereby improving the efficiency of charging.

Only one of the plurality of power transmission coils may be in the state of transmitting power to the power receiving devices 20, and the plurality of power receiving devices 20 may be charged to a fully charged state in turn, switching one coil in the power transmission state based on the temperature detected by the temperature sensor 2512 of the power receiving device 20 to which the power is being transmitted.

In each of the above embodiments, communication may be performed using the power transmission coil and the power receiving coil.

The present invention can also be configured as follows.
[1] A wireless charging device comprising:
   a coil forming part including:
      a plurality of element parts including a switch part; and
      conductors connecting adjacent the element parts, the coil forming part being applied to a charging surface where a charging target is disposed; and
   a control unit that controls the conductors between the adjacent element parts to be in either a conducting state or a non-conducting state by controlling the switch part to be either an ON state or an OFF state,
   wherein,
   the control unit is configured to control the switch part to form a coil on the charging surface, the coil including the switch part in the ON state and the conductor in the conducting state that allows current to flow, the switch part in the ON state and the conductor in the conducting state forming a coil-shaped current path.
[2] The wireless charging device according to [1],
   wherein
   the control unit is configured to move the position of the formed coil in the charging surface by controlling the switch part.
[3] The wireless charging device according to [1],
   wherein
   the control unit is configured to change at least one of a shape and a size of the formed coil by controlling the switch part.
[4] The wireless charging device according to [1],
   wherein
   the control unit is configured to control the switch part to form a plurality of the coils.
[5] The wireless charging device according to [1],
   wherein
   the control unit is configured to:
   determine, after forming the coil at a predetermined position on the charging surface, whether or not a power receiving device as the charging target is present on the charging surface by transmitting power from the coil while moving the coil on the charging surface; and
   transmit power to the power receiving device with the coil at the location where the power receiving device is determined to be present.
[6] The wireless charging device according to [5],
   wherein
   the control unit is configured to:
   measure an efficiency of the power supply at the location where the power receiving device is determined to be present; and
   transmit the power to the power receiving device by the coil at the position where the efficiency of the power feed is determined to be within an acceptable range.
[7] The wireless charging device according to [1],
   wherein
   the control unit is configured to:
   execute, after forming the coil at a predetermined position on the charging surface by controlling the switch part, power receiving device detection process that detects the position where the power receiving device as a charging target is on the charging surface by transmitting power from the coil while moving the coil on the charging surface; and
   form the coil at each of the one or more positions detected by the receiving device detection process to transmit power to the power receiving device using the formed coil.
[8] The wireless charging device according to [7],
   wherein
   the control unit is configured to:
   change a size of the coil by controlling the switch part and measure the efficiency of power supply when power is transmitted with the coil of the changed size, so as to identify the size of the coil with the highest efficiency of power supply;
   change a shape of the coil by controlling the switch part and measure the efficiency of power supply when power is transmitted with the coil of the changed shape, so as to identify the shape of the coil with the highest efficiency of power supply; and
   form the coil of the size and the shape with the highest power supply efficiency at one or more locations detected by the power receiver detection process to transmit power to the power receiver by the coil.
[9] The wireless charging device according to [1],
   wherein
   a plurality of the coil forming parts are applied to one the charging surface.
[10] The wireless charging device according to [1],
   wherein
   the control unit is configured to:
   control the switch part to thereby form at least one of the coils for NFC devices and the coils for power transmission.
[11] The wireless charging device according to [1],
   wherein
   a power supply layer and a magnetic field shield layer are laminated on a base material, and the switch part is provided on the magnetic field shield layer.
[12] The wireless charging device according to [1],
   wherein
   the control unit is configured to control the switch part to thereby form the coil for power transmission and the coil in a non-powered state.
[13] The wireless charging device according to [1],
   wherein
   the plurality of the element parts are arranged in an in-plane direction, such that each of rows comprising the plurality of the element parts arranged at even intervals is lined up at even intervals in a direction orthogonal to a row direction of the rows.
[14] A wireless charging device comprising:
   a coil forming part in which a conductor and a plurality of semiconductor switching element groups including a plurality of semiconductor switching elements are regularly arranged in an in-plane direction, the coil forming part being applied to a charging surface on which a charging target is disposed; and
   a control unit that controls the conductor between the adjacent semiconductor switching element groups to be in either a conducting state or a non-conducting state by controlling each of the semiconductor switching elements to be either an ON state or an OFF state,
   wherein,
   the control unit is configured to control each of semiconductor switching elements t to form a coil on the charging surface, the coil including at least one of the semiconductor switching elements in the ON state and the conductor in the conducting state that allows current to flow, the at least one of the semiconductor switching elements in the ON state and the conductor in the conducting state forming a coil-shaped current path.
[15] A coil forming device comprising:
   a coil forming part including:
      a plurality of element parts including a switch part; and
      conductors connecting adjacent the element parts, the coil forming part being applied to a coil forming target surface; and
   a control unit that controls the conductors between the adjacent element parts to be in either a conducting state or a non-conducting state by controlling the switch part to be either an ON state or an OFF state,
   wherein,
   the control unit is configured to control the switch part to form a coil on coil forming target surface, the coil including the switch part in the ON state and the conductor in the conducting state that allows current to flow, the switch part in the ON state and the conductor in the conducting state forming a coil-shaped current path.
[16] The coil forming device according to [15],
   wherein,
   the coil forming target surface is a power receiving surface of a power receiving device.
[17] The coil forming device according to [15],
   wherein,
   the control unit is configured to control the switch part to thereby move a position of the formed coil on the coil forming target surface.
[18] The coil forming device according to [15],
   wherein,
   the control unit is configured to change at least one of a shape and a size of the formed coil by controlling the switch part.
[19] The coil forming device according to [15],
   wherein,
   the control unit is configured to control the switch part to form a plurality of the coils.
[20] The coil forming device according to [15] for forming the coil used for communication.
[21] A power receiving device equipped with the coil forming device according to [15].

## Claims

1. A wireless charging device (10) comprising:
a coil forming part (16) including:
a plurality of element parts (100) including a switch part (S1, S2, S3, S4, S5, S6, S7, S8); and
conductors (200) connecting adjacent the element parts (100), the coil forming part (16) being applied to a charging surface where a charging target is disposed; and
a control unit (14) that controls the conductors (200) between the adjacent element parts to be in either a conducting state or a non-conducting state by controlling the switch part (S1, S2, S3, S4, S5, S6, S7, S8) to be either an ON state or an OFF state,
wherein,
the control unit (14) is configured to control the switch part (S1, S2, S3, S4, S5, S6, S7, S8) to form a coil (CL1) on the charging surface, the coil (CL1) including the switch part (S1, S2, S3, S4, S5, S6, S7, S8) in the ON state and the conductor (200) in the conducting state that allows current to flow, the switch part (S1, S2, S3, S4, S5, S6, S7, S8) in the ON state and the conductor (200) in the conducting state forming a coil-shaped current path.

2. The wireless charging device (10) according to claim 1,
wherein
the control unit (14) is configured to move the position of the formed coil (CL1) in the charging surface by controlling the switch part (S1, S2, S3, S4, S5, S6, S7, S8).

3. The wireless charging device (10) according to claim 1,
wherein
the control unit (14) is configured to change at least one of a shape and a size of the formed coil (CL1) by controlling the switch part (S1, S2, S3, S4, S5, S6, S7, S8).

4. The wireless charging device (10) according to claim 1,
wherein
the control unit (14) is configured to control the switch part (S1, S2, S3, S4, S5, S6, S7, S8) to form a plurality of the coils (CL11, CL12).

5. The wireless charging device (10) according to claim 1,
wherein
the control unit (14) is configured to:
determine, after forming the coil (CL1) at a predetermined position on the charging surface, whether or not a power receiving device (20) as the charging target is present on the charging surface by transmitting power from the coil (CL1) while moving the coil (CL1) on the charging surface; and
transmit power to the power receiving device (20) with the coil (CL1) at the location where the power receiving device (20) is determined to be present.

6. The wireless charging device (10) according to claim 5,
wherein
the control unit (14) is configured to:
measure an efficiency of the power supply at the location where the power receiving device (20) is determined to be present; and
transmit the power to the power receiving device (20) by the coil (CL1) at the position where the efficiency of the power feed is determined to be within an acceptable range.

7. The wireless charging device (10) according to claim 1,
wherein
the control unit (14) is configured to:
execute, after forming the coil (CL1) at a predetermined position on the charging surface by controlling the switch part (S1, S2, S3, S4, S5, S6, S7, S8), power receiving device detection process that detects the position where the power receiving device as a charging target is on the charging surface by transmitting power from the coil (CL1) while moving the coil (CL1) on the charging surface; and
form the coil (CL1) at each of the one or more positions detected by the receiving device detection process to transmit power to the power receiving device (20) using the formed coil (CL1) .

8. The wireless charging device (10) according to claim 7,
wherein
the control unit (14) is configured to:
change a size of the coil (CL1) by controlling the switch part (S1, S2, S3, S4, S5, S6, S7, S8) and measure the efficiency of power supply when power is transmitted with the coil (CL1) of the changed size, so as to identify the size of the coil (CL1) with the highest efficiency of power supply;
change a shape of the coil (CL1) by controlling the switch part (S1, S2, S3, S4, S5, S6, S7, S8) and measure the efficiency of power supply when power is transmitted with the coil (CL1) of the changed shape, so as to identify the shape of the coil (CL1) with the highest efficiency of power supply; and
form the coil (CL1) of the size and the shape with the highest power supply efficiency at one or more locations detected by the power receiver detection process to transmit power to the power receiver by the coil (CL1).

9. The wireless charging device (10) according to claim 1,
wherein
a plurality of the coil forming parts (16) are applied to one the charging surface.

10. The wireless charging device (10) according to claim 1,
wherein
the control unit (14) is configured to:
control the switch part (S1, S2, S3, S4, S5, S6, S7, S8) to thereby form at least one of the coils (CL31) for NFC devices and the coils (CL32) for power transmission.

11. The wireless charging device (10) according to claim 1,
wherein
a power supply layer and a magnetic field shield layer are laminated on a base material, and the switch part (S1, S2, S3, S4, S5, S6, S7, S8) is provided on the magnetic field shield layer.

12. The wireless charging device (10) according to claim 1,
wherein
the control unit (14) is configured to control the switch part (S1, S2, S3, S4, S5, S6, S7, S8) to thereby form the coil (CL12) for power transmission and the coil (CL16) in a non-powered state.

13. The wireless charging device (10) according to claim 1,
wherein
the plurality of the element parts (100) are arranged in an in-plane direction, such that each of rows comprising the plurality of the element parts (100) arranged at even intervals is lined up at even intervals in a direction orthogonal to a row direction of the rows.

14. A wireless charging device (10) comprising:
a coil forming part (16) in which a conductor (200) and a plurality of semiconductor switching element groups including a plurality of semiconductor switching elements are regularly arranged in an in-plane direction, the coil forming part (16) being applied to a charging surface on which a charging target is disposed; and
a control unit (14) that controls the conductor (200) between the adjacent semiconductor switching element groups to be in either a conducting state or a non-conducting state by controlling each of the semiconductor switching elements to be either an ON state or an OFF state,
wherein,
the control unit (14) is configured to control each of semiconductor switching elements t to form a coil (CL1) on the charging surface, the coil (CL1) including at least one of the semiconductor switching elements in the ON state and the conductor (200) in the conducting state that allows current to flow, the at least one of the semiconductor switching elements in the ON state and the conductor (200) in the conducting state forming a coil-shaped current path.

15. A coil forming device (10) comprising:
a coil forming part (16) including:
a plurality of element parts (100) including a switch part (S1, S2, S3, S4, S5, S6, S7, S8); and
conductors (200) connecting adjacent the element parts (100), the coil forming part (16) being applied to a coil (CL1) forming target surface; and
a control unit (14) that controls the conductors (200) between the adjacent element parts to be in either a conducting state or a non-conducting state by controlling the switch part (S1, S2, S3, S4, S5, S6, S7, S8) to be either an ON state or an OFF state,
wherein,
the control unit (14) is configured to control the switch part (S1, S2, S3, S4, S5, S6, S7, S8) to form a coil (CL1) on coil forming target surface, the coil (CL1) including the switch part (S1, S2, S3, S4, S5, S6, S7, S8) in the ON state and the conductor (200) in the conducting state that allows current to flow, the switch part (S1, S2, S3, S4, S5, S6, S7, S8) in the ON state and the conductor (200) in the conducting state forming a coil-shaped current path.

16. A power receiving device (20) equipped with the coil forming device (10) according to claim 15.
